(19)

**Europäisches Patentamt**

**European Patent Office**

**Office européen des brevets**

(11) **EP 4 691 225 A1**

(12) **EUROPEAN PATENT APPLICATION**

(43) Date of publication:
**11.02.2026  Bulletin 2026/07**

(21) Application number: **25193247.1**

(22) Date of filing: **31.07.2025**

(51) International Patent Classification (IPC):
**A01G 31/00** [(2018.01)]    **A01G 31/02** [(2006.01)]

(52) Cooperative Patent Classification (CPC):
**A01G 31/011; A01G 31/0232**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:  **07.08.2024  IT 202400018646**

(71) Applicant: **Università di Pisa**
**56126 Pisa (IT)**

(72) Inventors:
• **CARAMASSI, Giulia**
  **Pisa (IT)**

• **CELA, Fatjon**
  **Pisa (IT)**
• **CHESSA, Stefano**
  **Pisa (IT)**
• **INCROCCI, Luca**
  **Pisa (IT)**
• **KOCIAN, Alexander**
  **Pisa (IT)**
• **MILAZZO, Paolo**
  **Pisa (IT)**
• **TORSI, Silvia**
  **Pisa (IT)**

(74) Representative: **De Ros, Alberto**
**Società Italiana Brevetti S.p.A.**
**Via G. Carducci 8**
**20123 Milano (IT)**

(54) **SMART SYSTEM FOR MANAGING SOILLESS CULTIVATIONS**

(57)    The system (100) may be used for managing soilless cultivations in a smart way and comprises at least: a basin (110) configured to carry plants (115), placed in particular in pots (112) or on a slab (113), and plant substrate (116), contained in particular in the pots (112) or the slab (113), and to collect any drainage solution (114), in particular from the pots (112) or the slab (113), a base (120) configured to support the basin (110), at least one weight sensor (130A, 130B) configured to detect weight of the basin (110) with plants (115), substrate (116) and any drainage solution (114), a temperature sensor (142) configured to measure air temperature above the basin (110), a humidity sensor (144) configured to measure air humidity above the basin (110), a radiation sensor (146) configured to measure global radiation above the basin (110), possibly a wind sensor (148) configured to measure wind speed above the basin (110), a drainage valve (170) configured to discharge drainage solution (114) from the basin (110), possibly an irrigation valve (180) configured to irrigate the plants (115) in the basin (110), and a controller (190), comprising in particular an IoT device; the controller (190) is coupled to the sensors as well as to the drainage valve (170) and the irrigation valve (180), and is configured to control the valves based on data from the sensor. Such system is able to calculate automatically the current values of several important agronomic parameters as well as to predict for example crop biomass, crop evapotranspiration, crop growth and crop coefficient through one or more Dynamic Bayesian Networks as well as to measure pH and EC of the drainage solution, which is important for optimizing the fertigation in the soilless systems.

Fig. 4

EP 4 691 225 A1

**Description**

**Technical field of the invention**

The present invention relates to a system for managing soilless cultivations in a smart way.

In particular, the innovative system allows to monitor the cultivations and possibly control irrigation of the cultivations in an accurate way.

**State of the art**

Protected horticulture (vegetable and ornamental crops cultivated in greenhouses or other systems able to optimize environmental factors for crop production) is one of the most important sectors of agriculture.

In this sector, in the last 30 years, a new growing technique system called "soilless culture" has been developed especially in order to control some problems correlated to the cultivation of the same crops in the same greenhouse soil. After that, soilless systems are also used in open-field cultivations, such as ornamental stock nursery plants, or aromatic plants cultivated in pots.

The soilless cultures are characterized by the use of substrate as support of the root apparatus instead of the use of soil. In general, the volume of root zone is very low (ten times less) with respect to the normal growing system, and this requires frequent irrigations with a continuous supply of nutrients (fertigation), with the result of a large and uncontrolled amount of drainage and then, with a low water and nutrient use efficiency.

In some areas, the technological level of greenhouses is very high and farmers control irrigation with climate computers, which are very expensive and whose management requires good IT and agronomic skills.

In other areas, thanks especially to the mild climate, greenhouses are simple structures and with very low technologies inside. In this case, soilless cultivations are often conducted as an open-loop system, which means that the leachate nutrient solution (drainage) is not re-used with a consequent large waste of water and nutrients. The main reasons for low efficiency in irrigation of the soilless cultures can be attributed to errors in estimating when it is necessary to irrigate the crop to restore in the substrate water loss by Evapotranspiration (ETc).

If ETc is known, irrigation can be accurately scheduled.

A standardized yet simple method for estimating ETc is the so-called FAO-56 method (FAO stands for "Food and Agriculture Organization"). Following this approach, a crop independent reference Evapotranspiration ($ET_0$) is multiplied with a crop specific coefficient (Kc) according to the formula: $ETc = ET_0 \times Kc$ .

$ET_0$ may be calculated by evaluating the Penman-Monteith equation that expresses $ET_0$ as a function of several climate parameters, in particular: global radiation (RG), air temperature (T), air relative humidity (RH), wind speed (WS), and aerodynamic resistance (ra); in general, the aerodynamic resistance (ra) is, in turn, a function of the wind speed (WS); it is to be noted that the relevance of such parameters in the equation depends on the environments and the conditions where crops is cultivated. Evidently, such calculation is not an easy task to be carried out accurately.

Furthermore, according to the prior art, the crop specific coefficient (Kc) must be determined experimentally and varies with the leaf area development of the crop over time. Its determination is burdensome, and it must be done at least once every 10 days.

Consequently, growers do hardly apply the FAO-56 method in practice.

Another important problem in soilless cultivations is the control of fertigation; in fact, it should be so modulated to avoid the build-up of salts in the root zone which would lead to a reduction in crop productivity. To avoid salinity build-up in the soilless cultivation, grower should check every day the volume and the chemical characteristics (pH and electrical conductivity, EC) of the drainage: this fundamental operation is time-consuming.

It is to be noted that, in the following, the following symbols are also used for the sake of simplicity ETC, ET0, KC, RA, RH, WS, EC, LF including all capital letters.

**Summary of the invention**

It is the ultimate goal of the present invention to allow an optimal management of plants in soilless cultivations by controlling their irrigation and their fertigation. It is desirable that such goal is achieved with little waste of water and nutrients, i.e. avoiding errors in both irrigation and fertigation.

In order to achieve such goal accurate monitoring of the plants is important, including assessing their growth. It is specifically important to maintain optimal chemical growing conditions in the root zone of the plants, and, according to the present invention, (automatic) monitoring of specific parameters (i.e. leaching fraction (LF) of the plants, acidity/basicity (pH) and electro-conductivity (EC) of the drained solution) is achieved.

For optimal management of plants, it is also advantageous to provide the farmer with both current data, in particular current values agronomic parameters, and future data, in particular future values agronomic parameters.

In the light of the above, the present invention provides a system for managing soilless cultivations as set out in independent claim 1.

Advantageous features of the present invention are set out in the dependent claims.

It is to be noted that such innovative system is easy to be installed in any environment, in particular in existing greenhouses having no special technical means (preferably with an electric power source such a connection to an electricity grid, but even without), and it is easily portable.

According to the present invention, current data may be provided in real time and future data are predicted by means of Artificial Intelligence, specifically through Dynamic Bayesian Network(s), and may also be provided basically in real time; a remote server (that may be a component of the inventive system) may take care of more complex calculations in particular Artificial Intelligence calculations.

Such data (both current and future) may be used by the inventive system to compute in particular the crop coefficient (Kc), and this may be done after only few days of observation and avoiding destructive measurements.

The system according to the present invention includes devices, in particular sensors, specifically adapted to feed data for the Artificial Intelligence algorithms, more specifically for the Dynamic Bayesian Network algorithms,

**Brief description of the drawings**

A more complete appreciation of the present invention and its advantages will be readily obtained from the following detailed description when considered in connection with the accompanying drawings, wherein:

Figure 1 is a block diagram of an embodiment of a system according to the present invention;
Figure 2 is a simplified block diagram of an embodiment of an arrangement according to the present invention;
Figure 3 is a state diagram of a finite state machine that may be implemented by the system of Figure 1 when in monitoring mode according to some embodiments; and
Figure 4 is a flowchart of a method that may be implemented by the system of Figure 1 when in monitoring mode according to some embodiments.

Neither the detailed description nor the accompanying drawings should be construed as a limitation of the present invention but only as an exemplification as they refer to one or more possible embodiments.

**Detailed description**

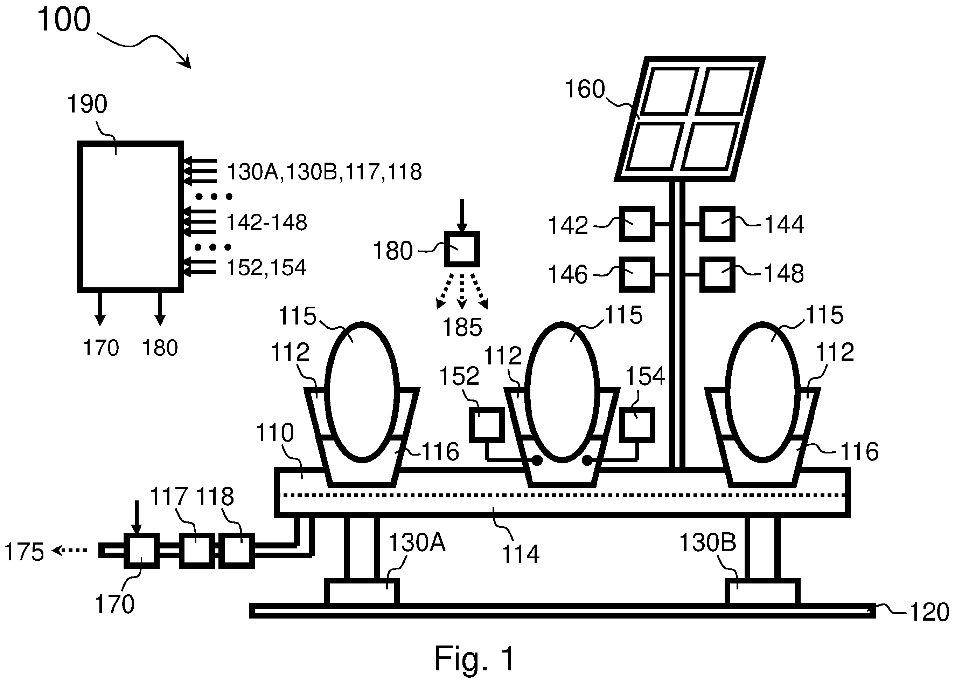

Figure 1 shows an embodiment of a system 100 according to the present invention for managing soilless cultivations.

Fig. 1 shows, as an example, three plants 115 placed in three pots 112 (alternatively, the plants may be placed on a slab 113 (not shown in Fig. 1); some plant substrate 116 is contained in each of the pots 112; some drainage solution 114 is also shown at the bottom of a basin 110. It is to be noted that the pots (or alternative that slab) with the plants and the substrate, and the drainage solution are not components of the system. Furthermore, not all the devices shown in Fig. 1 are necessary components of a system according to the present invention.

Essentially, system 100 comprises:

a) a basin 110 configured to carry plants 115, placed in particular in pots 112 (or on a slab 113), and plant substrate 116, contained in particular in the pots 112 (or the slab 113), and to collect any drainage solution 114, in particular from the pots 112 (or the slab 113),
b) a base 120 configured to support the basin 110,
c) at least one weight sensor (Fig. 1 shows two weight sensors 130A or 130B) configured to detect weight of the basin 110 with plants 115, substrate 116 and any drainage solution 114,
d) a temperature sensor 142 configured to measure air temperature above the basin 110,
e) a humidity sensor 144 configured to measure air humidity above the basin 110,
f) a radiation sensor 146 configured to measure global radiation above the basin 110,
g) possibly a wind sensor 148 configured to measure wind speed above the basin 110,
h) a drainage valve 170 configured to discharge drainage solution 114 from the basin 110, and
i) a controller 190, comprising, in particular, an IoT [= Internet of Things] device, coupled to the drainage valve 170 and the sensors and configured to control the drainage valve 170 based on data received from the sensors, in particular the at least one weight sensor (Fig. 1 shows two weight sensors 130A or 130B).

As shown in Fig. 1, system 100 comprising only two weight sensors 130A and 130B, in particular in the form of load cells, located at two opposite longitudinal end zones of the basin 110. If only one weight sensor is used, it should preferably be located at a central zone of basin 110.

In Fig. 1, load cells 130A and 130B are located upon base 120 and under a frame at the bottom of basin 110.

In Fig. 1, sensors 142-148 are mounted for example to a post that may be used also for supporting at least one solar panel 160. Such sensors, in particular the humidity sensor and the wind sensor, are not strictly necessary if one is interested only in predicting biomass and crop growth; however, they are necessary for accurately predicting crop coefficient using the Pennman-Monteith-FAO formula. Indeed, the wind sensor may be avoided if the system is used for plants in a greenhouse.

In Fig. 1, valve 170 is fluidly coupled with the bottom of basin 110 through a pipe that is also used to feed drainage solution (see reference 175) from basin 110 (that might be recirculated after any adequate treatment).

Advantageously, according to some advantageous embodiments, system 100 comprises further an irrigation valve 180 configured to irrigate the plants 115 in the basin 110 based on data received from one or more sensors. In this case, the controller 190 is coupled to the irrigation valve 180 and is configured to control the irrigation valve 180 based on data received from one or more sensors. In Fig. 1, any piping used for distributing the irrigation solution 185 (typically, water and nutrients) fed by irrigation valve 180 to the plants is not shown.

It is to be noted that an irrigation valve may be already present in an environment where a system according to the present invention is to be installed. In this case, it may be sufficient to provide that the controller has an output terminal configured to drive such irrigation valve.

The inventive system according to the present invention may be used for controlling a small number of plants or (more typically) a large number of plants. For example, system 100 in Fig. 1 is configured to monitor three plants and to output agronomic parameters values specifically relating to these three plants; however, the same parameters values are likely valid also for many other plants located in the surrounding of these three plants. Furthermore, the same irrigation strategy deriving from monitoring these three plants may be applied not only to these three plants but also to many other plants located in the surrounding of these three plants; therefore, a same irrigation valve controlled by a single inventive system may control irrigation of several plants, i.e. many more than those ones directly monitored.

As it will become clearer from the following, the system according to the present invention, e.g. system 100, is configured to predict biomass and/or evapotranspiration and/or crop growth and/or crop coefficient of plants based on data from the sensors through one or more Dynamic Bayesian Networks that are a form of Artificial Intelligence means and that are particularly effective for the predictions according to the invention. This is useful for example if the system is in monitoring mode and/or if the system is in controlling mode (if provided).

Advantageously, according to some embodiments, system 100 comprises further:

- a pH sensor 117 configured to measure pH of the drainage solution 114 in the basin 110, and/or
- an electrical conductivity (EC) sensor 118 configured to measure electrical conductivity of the drainage solution 114 in the basin 110.

In Fig. 1, the pH sensor 117 and the EC sensor 118 are located along the pipe that feeds drainage solution to the drainage valve 170 so they can measure their respective parameters at any drainage event; they can be upstream or downstream the valve.

Advantageously, according to some embodiments, system 100 comprises further:

- a volumetric water content sensor 152 configured to measure humidity of the (or each) substrate quantity(ies) 116 in the basin 110, and/or
- a bulk electrical conductivity sensor 154 configured to measure the electrical conductivity of the substrate 116 in the basin 110;

in this case, the controller 190 may be configured to control the irrigation valve 180 based on data received from the volumetric water content sensor 152 and/or the bulk electrical conductivity sensor 154.

According to the embodiment of Fig. 1, the controller 190 is coupled to both the drainage valve 170 and the irrigation valve 180 for control thereof, and to all sensors, namely sensors 130 (i.e. 130A and 130B), 117, 118, 140 (i.e. 142-148), and 150 (i.e. 152 and 154) for performing storage and/or calculation and/or control.

According to the embodiment of Fig. 1, system 100 comprises further at least one solar panel 160 configured to provide electric power to electrically-powered components of system 100, in particular to the controller 190.

The system according to the present invention, for example system 100 of Fig. 1, may work in stand-alone mode thanks to the computing power of its controller, in particular of its IoT device. However, more advantageously, it may work in cooperation with a remote server in particular a cloud server coupled (advantageously wirelessly) to the system. The server may perform difficult/complex calculations (in particular Artificial Intelligence calculations) and/or calculations based on data not available locally to a single system.

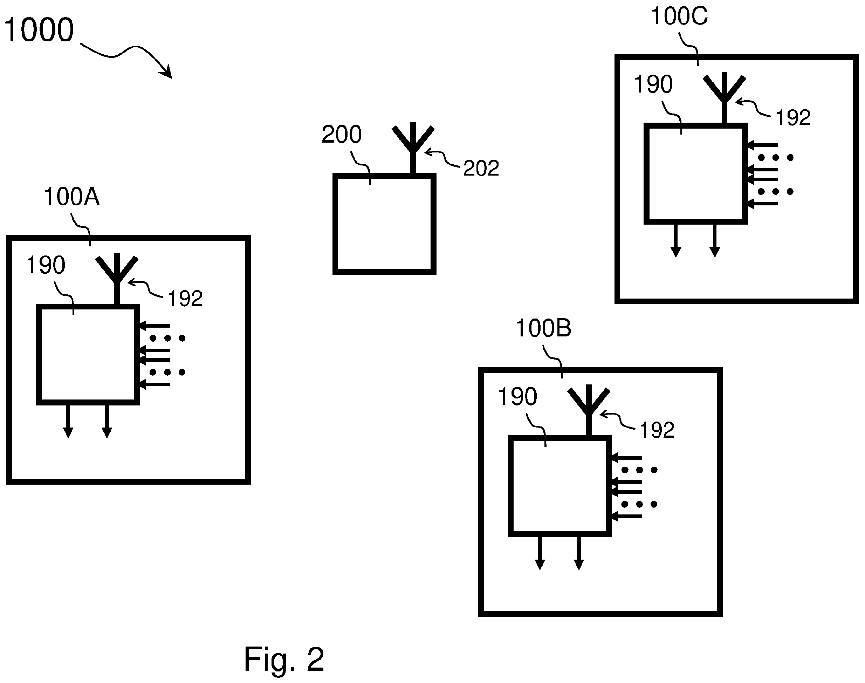

As shown in Fig. 2, a local system 100A, in particular the controller 190 of the system, may be configured to be coupled (through one or more wired connections and/or one or more wireless connections) to a remote server 200; it is to be noted that, in general an IoT device has communication ability (often both wired and wireless communication ability). According to the example of Fig. 2, wireless communication is provided, in particular, through the Internet, for both the local systems and the remote server; an antenna 192 of system 100A and an antenna 202 of server 200 are shown representing schematically such communication. Alternatively, for example, the local system may be connected to e.g. the Internet through wireless communication and the remote server may be connected to e.g. the Internet through wired communication. The system may be configured to send measured data from the sensors to the server and possibly receive processed data from the server.

More in detail, Fig. 2 shows an arrangement 1000 comprising a remote server 200 and a plurality of local systems, specifically systems 100A and 100B and 100C. This may allow to carry out calculations based on data detected locally at different locations. Once the present invention has been described from the architectural point of view, methodological aspects may be described.

A system according to the present invention, in particular its controller, may be configured to operate in a monitoring mode or in a controlling mode. It is to be noted that the controlling mode provides typically not only control functions (for example, the function of opening and closing an irrigation valve according to some algorithm) but also monitor functions (for example the detection of physical values and/or the determination of agronomic parameters), the monitor functions being linked to the control functions.

In a monitoring mode, during a time interval (for example of some days or weeks) irrigation events (not necessarily caused by a system according to the present invention) are followed, immediately or after a short time (for example less than 1 minute) by drainage events (caused by a system according to the present invention). During a drainage event, all the solution collected at the bottom of the basin is discharged through the drainage valve. After a drainage event, some time (that may not be known by a system according to the present invention and may last, e.g. few hours) passes before a following irrigation event.

One or more or all of the following parameters are repeatedly computed at each irrigation-drainage event pair:

- Irrigation of the plants in the basin,
- Drainage from the plants in the basin,
- Leaching Fraction of the plants in the basin,
- Crop Evapotranspiration of the plants in the basin,
- Crop Specific Coefficient of the plants in the basin relative to a reference Evapotranspiration;

based on data at least from the weight sensor(s) (for example, sensors 130A and 130B).

According to embodiments of the system according to the present invention, the local controller may collect data from the weight sensor(s) and possibly send such data to a remote server for any calculations and computations. Alternatively, for example, the local controller may compute some parameters, possibly store them locally after computation and send them remotely. Alternatively, for example, the local controller may compute some parameters locally, make some predictions locally, store computed and predicted data locally and perform control based on such data. It is evident that many other alternatives are possible.

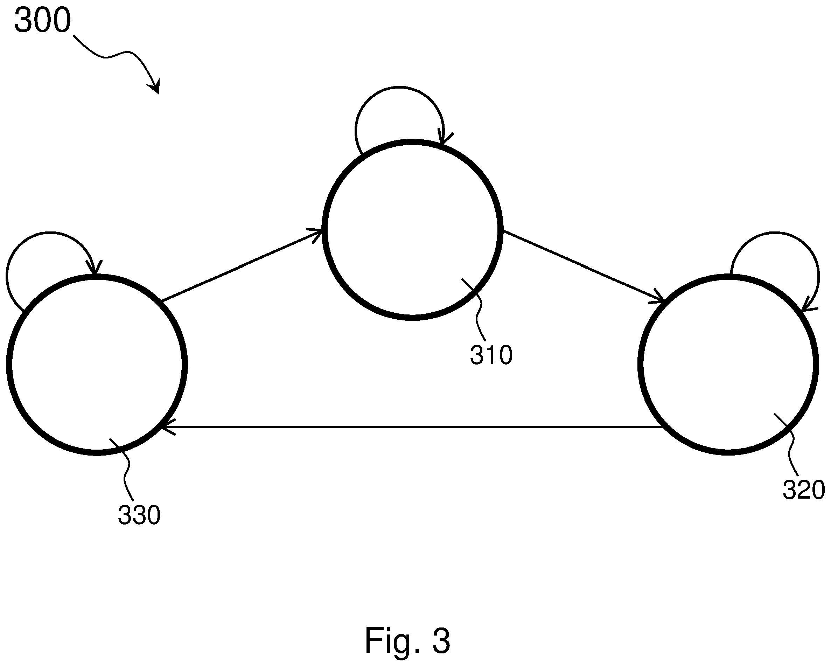

The controller, for example controller 190, may be is configured to implement a finite state machine including three states as shown in Fig. 3:

- a first state 310 corresponding to an irrigation event possibly caused by the irrigation valve 180,
- a second state 320 corresponding to a drainage event caused by the drainage valve 170;
- a third state 330 before a first irrigation event or from an end of a drainage event to the begin of a subsequent irrigation event;

wherein state transitions occur based on data from the weight sensor(s) (for example, sensors 130A and 130B) as explained for example in the following; it is to be noted that weight is repeatedly acquired by the controller from the weight sensor(s) but the "sampling period" for these states may not be the same (for example, "sampling period" for state 330 may be much longer than "sampling period" for states 310 and 320).

The controller keeps a variable "n" that counts the number of irrigation events observed so far and the drainage events caused. Initially, the controller is in the state 330, in which it wakes up at regular time intervals (set to e.g. 5-20 minutes), to record relevant climate parameters (temperature and humidity of air, global radiation, and wind speed from sensors 142-148) as well as the weight of the basin (from sensors 130A and 130B). If the actual weight is less than the previously measured weight (plus tolerance), the newly measured weight is labelled $P0(n)$ (and the state remains 330), otherwise the weight is labelled $P1(n)$ and the controller switches to state 310. In the latter case (state 310), irrigation has already started and is in progress, thus the controller remains awake, and it keeps sensing data in short time-intervals (set to e.g. 30-90 seconds). If the actual weight is larger than the previous, the label of the weight remains $P1(n)$ and the controller remains in state 310. Otherwise, if the latest weight measurement is less than or equal to the previously measured (plus tolerance), the weight is labelled P2(n) (at this point, irrigation must have been finished), the controller then opens the drainage valve to empty the basin, and the controller switches to state 320, i.e. a drainage event has just started and will be under the control of the controller.

In state 320, the controller keeps sensing as in state 310, but it labels the weights P2(n). The controller remains in state 320 until the weight keeps decreasing, and once it remains stable (it means that the drainage event must be concluded), the controller computes several parameters according to equations set out in the following; the controller switches back to state 330 and increases the counter "n" to be ready for the next irrigation event, and the controller closes the drainage valve. Note that the closing of the drainage valve should preferably occur in a short time in order not to interfere with the weight loss by natural evapotranspiration.

In Fig. 3, loops transitions around states 310, 320, 330 mean that a weight detection causes to remain in the same state.

The following are equations for some of the parameters:

Irrigation (L/m$^2$):

$$Irr(n) = (P1(n)-P0(n))/NT * PD/\rho$$

Drainage (L/m$^2$):

$$D(n) = (P1(n)-P2(n))/NT * PD/\rho$$

Leaching Fraction (%):

$$LF(n) = D(n)/Irr(n) * 100$$

Where NT is the number of the plant monitored on the basin, PD is plant density (plant/m$^2$), and $\rho$ is the nutritive solution density (kg/L) that can be equated to 1.0 making an error smaller than 0.5% in the worst case.

The controller may calculate the interval between the time of P0(n) and that of P2(n-1) of the previous irrigation-drainage events pair, in order to compute Crop Specific Coefficient of the plants in the basin relative to a reference Evapotranspiration and/or Crop Evapotranspiration of the plants in the basin as follows:

Crop Evapotranspiration (Lm$^2$):

$$ETc(n) = (P2(n-1)-P0(n))/NT * PD/\rho$$

Crop Specific Coefficient (dimensionless):

$$Kc(n) = ETc(n) / ET_0[n]$$

Where $ET_0[n]$ is the reference evapotranspiration (or simply $ET_0$) calculated applying the Penman-Monteith-FAO formula in the same time interval of the calculated ETc (n), using the climate data (for example, data from the sensors 142, 144, 146, 148). During the next sensing interval, the controller labels the measured weight as the next P0(n+1) before it goes to state 330 again.

All these calculated data, along with the pH and EC of the drainage solution (for example, data from the sensors 117 and 118) and possibly the volumetric water content and EC of the substrate (for example, data from the sensors 152 and 154) may be sent to the server for further processing including prediction of biomass and/or evapotranspiration and/or crop growth and/or crop coefficient.

In particular, the values of LF, pH and EC may be compared with "reference range values" specific for the monitored crop: these values can be inserted manually from the grower or already present in a plant crop database.

According to some advantageous embodiments, the system (for example, system 100) is also configured to operate in a controlling mode, wherein the irrigation valve (for example, valve 180) is controlled iteratively. Such control is advantageously based on a desired value of Leaching Fraction so that it may be maintained constant.

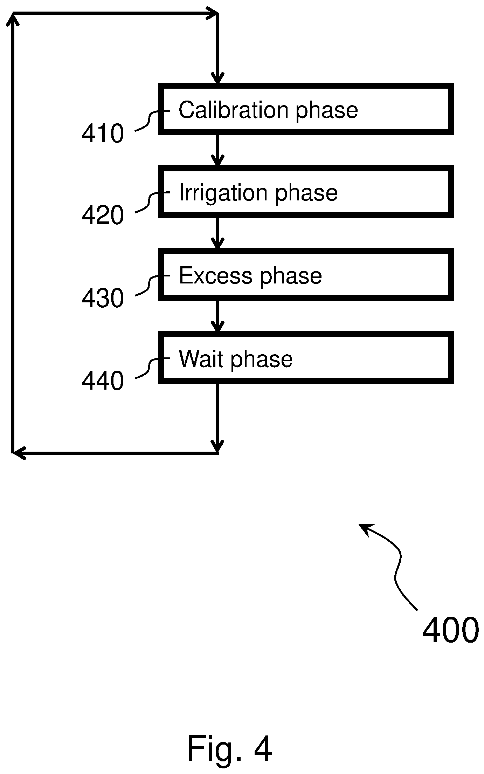

In this case, see for example flowchart 400 in Fig. 4, the controlling mode provides repeatedly, i.e. iteratively, for:

- possibly a "calibration phase" (see e.g. block 410 in Fig. 4) aimed at determining an effective irrigation flow rate caused by the irrigation valve, then
- an "irrigation phase" (see e.g. block 420 in Fig. 4) aimed at restoring the weight of the basin by opening the irrigation valve and keeping it open, then
- an "excess phase" (see e.g. block 430 in Fig. 4) aimed at reaching the desired Leaching Fraction by keeping the irrigation valve open, and then
- a "wait phase" (see e.g. block 440 in Fig. 4).

Such "waiting time" may be fixed and predetermined. Alternatively, the iteration period is fixed and predetermined. Still alternatively, iterations as set out above (i.e. the execution of the above phases) may start at fixed and predetermined times of the day (for example, 6 a.m. and 6 p.m.). Still alternatively, the "waiting time" may be defined as the time necessary for a predetermined weight loss so that, for example, the water content in the substrate is maintained within a predetermined range during crop growth.

In this way, a system according to the present invention may include automatic start and stop of irrigation in a recursive fashion until a crop-specific leaching fraction is reached, making irrigation consumption sustainable and machine learning-based prediction of biomass production possible.

When a system according to the present invention acts as an irrigation controller, the proposed system may be not only part of the local closed loop in the monitoring mode described above but also part of a global closed loop to automate irrigation as well as to predict e.g. biomass using advantageously Artificial Intelligence based on e.g. a Dynamic Bayesian approach.

For automated irrigation, the system may use the irrigation trigger P* (weight, soil humidity, or time difference). This value, along with the desired leaching fraction (which is a plant specific parameter), is sent to the controller. The constant leaching fraction (LF) is advantageous in order to keep salinity in the substrate constant, making biomass production predictable and irrigation water consumption sustainable. As soon as the current weight P0 falls below P* (in case the weight is used as a trigger), irrigation occurs.

It is to be noted that water supply pressure may change from one irrigation event to the next. Thus, advantageously, the system may recursively perform irrigation in three phases. Evapotranspiration loss during the time of irrigation may be assumed to be constant (but not negligible if the temperature is high); this is a reasonable approach because the environmental conditions do hardly change during the short time of irrigation.

A possible example of the controlling mode will be described in detail in the following.

During the "waiting phase", the system continuously updates the rate of Evapotranspiration dET/dT as the (positive) weight difference between two measurement points divided by their respective time difference.

During the "calibration phase", the system supplies volume I0(n) of irrigation liquid and computes two weight values: the weight measured right before irrigation P0'(n) = P0(n) at time T0'(n) and the weight measured right after irrigation P1'(n) at time T1'(n). There is no drainage yet at that point. At the same time, the evapotranspiration loss during irrigation is equal to dET/dT x (T1'(n)-T0'(n)). The actual supplied irrigation volume I0(n) is therefore

$$I0(n) = P1'(n) - P0'(n) + \frac{dET}{dT}(T1'(n) - T0'(n))$$

It is to be noted that a calibration phase may be performed before each irrigation event or less frequently or even never if the irrigation flow rate is considered constant and predetermined.

During the "irrigation phase", the system computes three weight values: the weight measured right before irrigation P0"(n)=P1'(n) at time T0"(n)=T1'(n), the weight measured right after irrigation P1"(n) at time T1"(n), and the weight measured right after drainage P2"(n) at time T2"(n). At the same time, the evapotranspiration loss during irrigation is equal to dET/dT x (T2"(n)-T0"(n)). The system may use measured and/or computed data to determine irrigation time T1"(n)-T0"(n) according to the formula:

$$T1''(n) - T0''(n) = \frac{P2(n-1) - P0''(n)}{I0(n)}(T1'(n) - T0'(n))$$

In this way, the actual supplied volume I1(n) becomes

$$I1(n) = P1''(n) - P0''(n) + \frac{dET}{dT}(T1''(n) - T0''(n))$$

The weight after irrigation P2(n)" is roughly at the same level as the exit weight P2(n-1) during the previous irrigation event. If irrigation takes many minutes, an IoT client device may go into a power-saving mode to minimize energy consumption in the meantime.

During the "excess phase", the system adjusts the water amount for the desired leaching fraction. The system computes three weight values: the weight measured right before irrigation P0‴(n)=P2"(n) at time T0‴(n)=T2"(n), the weight measured right after irrigation P1"(n) at time T1"(n), and the weight measured right after drainage P2"(n) = P2(n) at time T2"(n).

As irrigation has already reached the previous weight level P2(n-1), additional irrigation water will likely be drained, and the following irrigation time T1‴(n)-T0‴(n) may be adjusted according to the formula:

$$\text{T1‴(n)} - \text{T0‴(n)} = \left(T2''(n) - T0'(n)\right) x \left(LF^* - \frac{P2''(n) - P1''(n)}{Io(n) + I1(n)}\right)$$

Where LF* is the desired leaching fraction.

An Artificial Intelligence component according to the present invention, in particular consisting of one or more Dynamic Bayesian Networks (that describe the probabilistic relationships between the physiological properties of the plant and the environment over time), may advantageously be implemented in a server, for example such as server 200 in Fig. 2.

The functionality of such component is typically to: (i) Predict biomass and/or crop growth of the crop based on the time series of irrigation events and sensor data, and/or (ii) Predict evapotranspiration (ETc) and/or crop coefficient (Kc) based on the time series of irrigation events and sensor data using also the standardized FAO-56 method.

The model requires a very short training phase using three data points during the current cultivation cycle and then refines its model parameters autonomously with subsequent data points using sensor data. After a few days, by applying the Expectation Maximization algorithm, the model is able to formulate a reliable prediction for the parameter to be estimated over the next ten to fifteen days, and the prediction is then day-by-day refined as long as new data are collected, and to perform prediction.

Prediction of biomass and crop growth - exemplary implementation

Crop growth from sowing to harvest is assumed to be a sigmoid-type (or, more in general, sigmoid-shape) time-series that is thus modelled as a scaled and time-shifted logistic function. Often sensor data is only available when the fresh weight of the plant has already reached or is near the inflection point of the growth function. According, biomass growth may be expressed, for example, as the following sigmoid function (or, more in general, as a sigmoid-shape function)

$$z_t = \kappa \left(1 - exp\left\{-\mu t\right\}\right)$$

over time t, with the system parameters $\kappa$ and $\mu$ denoting the steady state and the decay, respectively. Note that up to some integration constant, the solution of the above equation is a first-order linear ordinary difference equation.

Suppose sensor data is available for a period of T days. As weather is of stochastic nature, the underlying dynamics of biomass growth may be modelled as a dynamic model, where variables are all continuous; in particularly and advantageously, the underlying dynamics of biomass growth may be modelled as a dynamic linear model, where variables are all continuous and all of the dependencies are linear Gaussian. Denoting the state matrix $A \in R \times D$, the input matrix $B \in R \times K$, and the output matrix $C \in R \times D$, the possibly non-linear input output relation of the model is given by

$$z_{t+1} = f(z_t, u_t) + n_t$$

$$y_t = f(z_t) + w_t$$

The probabilistic state-space system described by these two equations forms a Dynamic Bayesian Network (DBN). The hidden states $z_1,...z_T$ cannot be observed directly but only by means of the observations $y_1 .... y_T$.

For example, assuming advantageously a linear relationship:

$$z_{t+1} = (I - A \, diag(u_t))z_t + Bu_t + n_t \qquad\qquad n_t \propto N(0, \Sigma_n) \text{ i.i.d}$$

$$y_t = Cz_t + w_t \qquad\qquad w_t \propto N(0, \Sigma_w) \text{ i.i.d}$$

$$z_t = \mu_1 + n_1 \qquad\qquad n_1 \propto N(0, \Sigma_1) \text{ i.i.d}$$

Here, $N(-; m, \Sigma)$ denotes a Gaussian distribution of the first argument having mean m and covariance $\Sigma$. Moreover, the symbol I denotes the identity matrix. The iterative Expectation-Maximization (EM) algorithm can be used to track the posterior state sequence as well as the set of system parameters $\theta = \{A, B, C, \Sigma_n, \Sigma_w, \mu_1, \Sigma_1\}$. While doing so, the log-likelihood function for the system parameters is non-decreasing in subsequent iterations. The first few data points in the same cultivation cycle are used for initialization of the EM algorithm. In a prototype system according to the present invention, the first six days were used for training. For details regarding initialization, see e.g. <<A. Kocian, G. Carmassi, F. Cela, L. Incrocci, P. Milazzo and S. Chessa. (2020). Bayesian Sigmoid-Type Time Series Forecasting with Missing Data for Greenhouse Crops. Sensors 2020, 20, 3246>>.

Once the evolution of hidden states and parameters have been estimated, the first of the three equations can be used to predict future values for time indices pointing into the future.

DBN's data (hidden data, control data, system parameters) can be chosen arbitrarily up to some mild regularity conditions. For biomass prediction, the system parameters and the sequence of hidden states are unknown,and therefore need to be estimated. Withing this context, it is proposed that the hidden data zt be the daily weight samples P2 right after irrigation (given preferably constant leaching fraction during irrigation, to exclude change in soil humidity and then to exclude or, at least, to reduce errors due to differences on substrate humidity between two different moments). Moreover, the control vector ut is composed of the daily irradiance and the number of growing degree days (GDD) which are related to the ambient temperature as well as the type of plant. Moreover, the measured data y corresponds to the measured weights P2. It is to be noted that instead of the P2 weight samples, P1 weight samples might be used.

It is to be noted that the leaching fraction is advantageously considered constant from irrigation to irrigation, so that soil water content does not influence biomass prediction. Otherwise, change in soil weight adds noise on top of the evolution of biomass. Automatic irrigation can be used to enforce this requirement.

Prediction of evapotranspiration and crop coefficient - exemplary implementation

The evolution of the crop coefficient, i.e. Kc, may follow that of the Leaf Area Index (LAI), evolving over time. The evolution of the crop coefficient over time may be described according to the following monotonously increasing equation (that is, in particular, an exponential-type equation):

$$Kc_t = \nu + \kappa e^{\mu(t-t_0)}$$

As plant growth behaves stochastically, Kc may be assumed a time-discrete Markov process following the evolution possibly according to the following non-linear set of state-space equations:

$$Kc_{t+1} = f(Kc_t, u_t) + n_t$$

$$y_t = f(Kc_t) + w_t$$

For example, assuming advantageously a linear relationship:

$$Kc_{t+1} = A\,Kc_t + Bu_t + n_t \qquad\qquad n_t \propto N(0, \Sigma_n) \text{ i.i.d}$$

$$y_t = C\,Kc_t + w_t \qquad\qquad w_t \propto N(0, \Sigma_w) \text{ i.i.d}$$

$$Kc_t = \mu_1 + n_1 \qquad\qquad n_1 \propto N(0, \Sigma_1) \text{ i.i.d}$$

Analogously to biomass estimation, the EM algorithm may be used to compute the sequence of hidden states and the system parameters to estimate the evolution of crop coefficient. Herein, it is proposed that the hidden data zt be the true Kct (which is unknown); the control vector ut be composed of the measured daily temperature, daily irradiation, daily wind speed; and the ratio yt = ETc/ET$_0$. ETc may be determined by a system according to the present invention and ET$_0$ may be the reference crop evapotranspiration readily available in scientific literature for open fields as well as for greenhouses.

In the light of the above, it may be stated, as a summary, that, according to some advantageous embodiments of the present invention, irrigation is controlled based on a prediction of biomass and/or evapotranspiration and/or crop growth and/or crop coefficient that is typically carried out by a server located remotely from the local managing system; however, the irrigation valve is controlled iteratively by the controller of the local managing system considering one or more of these predicted parameters.

As it is apparent from the above, one or more or all of these predictions may be carried out through DBN [= Dynamic Bayesian Network]. Background knowledge regarding use of DBNs in this specific technical field may be found e.g. in <<A. Kocian, G. Carmassi, F. Cela, L. Incrocci, P. Milazzo and S. Chessa. (2020). Bayesian Sigmoid-Type Time Series Forecasting with Missing Data for Greenhouse Crops. Sensors 2020, 20, 3246>>, <<A. Kocian, G. Carmassi, F. Cela, S. Chessa, P. Milazzo, L. Incrocci (2023). IoT based dynamic Bayesian prediction of crop evapotranspiration in soilless cultivations. Article in Computers and Electronics in Agriculture, Volume 205, 107608>>, <<A. Kocian, D. Massa, S. Cannazzaro, L. Incrocci, S. Di Lonardo, P. Milazzo, S. Chessa (2020). Dynamic Bayesian network for crop growth prediction in greenhouses. Article in Computers and Electronics in Agriculture, Volume 169, 105167>>.

Depending on the specific embodiment, only one DBN with a single output is used for the system or two distinct DBNs with single output each are used for the system or only one DBN with double output is used for the system, a first output may be related to a first model (for example a sigmoid growth) and a second output may be related to a second model (for example an exponential growth).

Advantageously, interactions (i.e. input of data and information and/or output of data and information) by a user with a system according to the present invention and/or with a server according to the present invention may be performed through an so-called App (running on e.g. a mobile communication device, for example, a smartphone or a tablet).

**Claims**

1. System (100) for managing soilless cultivations comprising:

   a) a basin (110) configured to carry plants (115), placed in particular in pots (112) or on a slab (113), and plant substrate (116), contained in particular in the pots (112) or the slab (113), and to collect any drainage solution (114), in particular from the pots (112) or the slab (113),
   b) a base (120) configured to support the basin (110),
   c) at least one weight sensor (130A, 130B) configured to detect weight of the basin (110) with plants (115), substrate (116) and any drainage solution (114),
   d) a temperature sensor (142) configured to measure air temperature above the basin (110),
   e) a humidity sensor (144) configured to measure air humidity above the basin (110),
   f) a radiation sensor (146) configured to measure global radiation above the basin (110),
   g) possibly a wind sensor (148) configured to measure wind speed above the basin (110),
   h) a drainage valve (170) configured to discharge drainage solution (114) from the basin (110), and
   i) a controller (190), comprising in particular an IoT device, coupled to the drainage valve (170) and the sensors and configured to control the drainage valve (170) based on data received from the sensors, in particular the at least one weight sensor (130A, 130B);

   wherein the system (100) is configured to predict of biomass and/or evapotranspiration and/or crop growth and/or crop coefficient of plants based on data from the sensors through one or more Dynamic Bayesian Networks.

2. System (100) according to claim 1, comprising only two weight sensors (130A, 130B), in particular in the form of load cells, located at two opposite longitudinal end zones of the basin (110).

3. System (100) according to any of the preceding claims, further comprising:

   l) a pH sensor (117) configured to measure pH of the drainage solution (114) in the basin (110), and/or
   m) an electrical conductivity sensor (118) configured to measure electrical conductivity of the drainage solution (114) in the basin (110).
   n) an irrigation valve (180) configured to irrigate the plants (115) in the basin (110);

4. System (100) according to any of the preceding claims, further comprising: n) an irrigation valve (180) configured to irrigate the plants (115) in the basin (110); wherein the controller (190) is coupled to the irrigation valve (180) and is configured to control the irrigation valve (180) based on data received from the sensors.

5. System (100) according to claim 4, further comprising:

   o) a volumetric water content sensor (152) configured to measure water content of the substrate (116) in the basin (110), and/or
   p) a bulk electrical conductivity sensor (154) configured to measure electrical conductivity of the substrate (116) in the basin (110);

   wherein the controller (190) is possibly configured to control the irrigation valve (180) based on data received from the volumetric water content sensor (152) and/or the bulk electrical conductivity sensor (154).

6. System (100) according to any of the preceding claims, further comprising at least one solar panel (160) configured to provide electric power to electrically-powered components of the system (100), in particular to the controller (190).

7. System (100) according to any of the preceding claims, wherein the system (100), in particular the controller (190), is configured to be coupled to a server (200) and is configured to send measured data from the sensors to the server (200) and possibly receive processed data from the server (200), the server (200) being in particular a cloud server wirelessly coupled to the system (100).

8. System (100) according to any of the preceding claims, wherein the system (100) is configured to operate in a monitoring mode during a time interval including irrigation events followed by drainage events, wherein one or more or all of the following parameters are repeatedly computed at each irrigation-drainage events pair:

   - Irrigation of the plants in the basin,
   - Drainage from the plants in the basin,
   - Leaching Fraction of the plants in the basin,
   - Crop Evapotranspiration of the plants in the basin,
   - Crop Specific Coefficient of the plants in the basin relative to a reference Evapotranspiration;

   based on data from at least one weight sensor (130A, 130B).

9. System (100) according to claim 8, wherein the controller (190) is configured to implement a finite state machine including three states:

   - a first state (310) corresponding to an irrigation event possibly caused by an irrigation valve (180),
   - a second state (320) corresponding to a drainage event caused by the drainage valve (170);
   - a third state (330) before a first irrigation event or from an end of a drainage event to the begin of a subsequent irrigation event;

   wherein state transitions occur based on data from at least one weight sensor (130A, 130B).

10. System (100) according to claim 8 or 9, wherein the system is configured to operate in a controlling mode, wherein an irrigation valve (180) is controlled iteratively based preferably on a desired value of Leaching Fraction.

11. System (100) according to claim 10, wherein an irrigation valve (180) is controlled iteratively based on a desired value of Leaching Fraction.

12. System (100) according to claim 10 or 11, wherein the controlling mode provides repeatedly for:

   - possibly a "calibration phase" (410) aimed at determining an effective irrigation flow rate caused by the irrigation valve (180), then
   - an "irrigation phase" (420) aimed at restoring weight of the basin (110), then
   - an "excess phase" (430) aimed at reaching the desired Leaching Fraction, then
   - a "wait phase" (440).

13. System (100) according to claim 10 or 11 or 12, wherein the irrigation valve (180) is controlled iteratively considering a prediction of biomass and/or evapotranspiration and/or crop growth and/or crop coefficient.

14. System (100) according to any of the preceding claims, wherein prediction of biomass and/or crop growth is carried out through a first Dynamic Bayesian Network.

15. System (100) according to claim any of the preceding claims, wherein prediction of evapotranspiration and/or crop coefficient is carried out through a second Dynamic Bayesian Network.

Fig. 1

Fig. 2

EP 4 691 225 A1

Fig. 3

Fig. 4

**EUROPEAN SEARCH REPORT**

Application Number

EP 25 19 3247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 110 896 836 A (BEIJING RES CT INTELLIGENT EQUIPMENT AGRICULTURE) 24 March 2020 (2020-03-24) * paragraphs [0002], [0021] - [0023], [0030], [0103], [0091], [0115] - [0118]; claims 4-8; figure 3 * | 1-15 | INV. A01G31/00 A01G31/02 |
| Y | CN 108 812 271 A (HEFEI CAOMUFANJING ECOLOGICAL TECH CO LTD) 16 November 2018 (2018-11-16) * paragraphs [0035], [0043], [0044] * | 1,2,4-6, 8-15 | |
| Y | KR 100 988 273 B1 (TIS CO LTD [KR]) 18 October 2010 (2010-10-18) * page 2 3 and page 3 1; paragraph [0031] * | 1,3,7 | |
| A | KR 101 979 751 B1 (KOREA INST SCI & TECH [KR]) 17 May 2019 (2019-05-17) * abstract; figure 2 * | 1-15 | |
| A | WO 2024/111718 A1 (SSL INC [KR]) 30 May 2024 (2024-05-30) * abstract; figure 1 * | 1-15 | TECHNICAL FIELDS SEARCHED (IPC) A01G |

The present search report has been drawn up for all claims

| Place of search | Date of completion of the search | Examiner |
|---|---|---|
| The Hague | 10 December 2025 | Spitz, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 3247

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2025

| Patent document cited in search report | | Publication date | Patent family member(s) | | Publication date |
|---|---|---|---|---|---|
| CN 110896836 | A | 24-03-2020 | NONE | | |
| CN 108812271 | A | 16-11-2018 | NONE | | |
| KR 100988273 | B1 | 18-10-2010 | NONE | | |
| KR 101979751 | B1 | 17-05-2019 | NONE | | |
| WO 2024111718 | A1 | 30-05-2024 | ES | 3031579 A2 | 09-07-2025 |
| | | | KR | 20240076867 A | 31-05-2024 |
| | | | WO | 2024111718 A1 | 30-05-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. KOCIAN** ; **G. CARMASSI** ; **F. CELA** ; **L. INCROCCI** ; **P. MILAZZO** ; **S. CHESSA**. *Bayesian Sigmoid-Type Time Series Forecasting with Missing Data for Greenhouse Crops. Sensors*, 2020, vol. 20, 3246
- **A. KOCIAN** ; **G. CARMASSI** ; **F. CELA** ; **S. CHESSA** ; **P. MILAZZO** ; **L. INCROCCI**. IoT based dynamic Bayesian prediction of crop evapotranspiration in soilless cultivations. *Article in Computers and Electronics in Agriculture*, 2023, vol. 205, 107608

- **A. KOCIAN** ; **D. MASSA** ; **S. CANNAZZARO** ; **L. INCROCCI** ; **S. DI LONARDO** ; **P. MILAZZO** ; **S. CHESSA**. Dynamic Bayesian network for crop growth prediction in greenhouses. *Article in Computers and Electronics in Agriculture*, 2020, vol. 169, 105167